Europäisches Patentamt

European Patent Office

Office européen des brevets

(11) Publication number : **0 511 179 A1**

## (12) EUROPEAN PATENT APPLICATION

(21) Application number : **92830192.8**

(22) Date of filing : **21.04.92**

(51) Int. Cl.⁵ : **B60R 9/042**

(30) Priority : **24.04.91 IT MC910012 U**

(43) Date of publication of application :
**28.10.92 Bulletin 92/44**

(84) Designated Contracting States :
**AT BE CH DE DK ES FR GB GR LI LU MC NL PT SE**

(71) Applicant : **GRUPPO MECCANICHE LUCIANI & C. - S.n.c.**
**Divisione GN Fustelle, Zona Industriale**
**I-62014 Corridonia (MC) (IT)**

(72) Inventor : **Luciani, Nelido,**
**Via Porta Sejano, 8**
**I-62014 Corridonia (MC) (IT)**

(74) Representative : **Baldi, Claudio**
**Piazza Ghislieri, 3**
**I-60035 Jesi (Ancona) (IT)**

(54) **Luggage-rack for cars having a high roof.**

(57)   This invention concerns a luggage-rack for cars having a high roof, consisting of a bar (1), used together with another identical bar, equipped with a means (1a) for fixing the same in transverse position on the roof of the car and which acts as support and runner for two rails (2) sliding opposite each other, which, when removed at the end of the run, can be turned downwards into a sub-vertical position in front of the side windows and doors of the car to facilitate loading and unloading operations.

FIG. 2

EP 0 511 179 A1

This patent application concerns a luggage rack for cars having a high roof such as pick-ups or all-terrain cars, designed to facilitate loading and unloading of luggage.

In recent years cars of this kind have become increasingly popular and despite the fact that they are designed and studied especially for use on sand roads or natural tracks they are today purchased as a normal car and used for city or inter-city transfers, mainly on tarmac.

Currently, specially designed luggage-racks do not exist for this type of car and when necessary, the same luggage-racks used for normal cars are mounted on these; standard luggage-racks consist generally of two identical bars with hooking and fastening systems at the two ends, which fix them on the roof of the car.

These bars can be used directly as supports and stop bridges for large parcels and luggage, or can be used as supports for the application of special means of devices such as ski carriers, bicycle-holder pins, boat-carrier systems, surf-board carrier brackets etc.

These racks which are very practical and functional when mounted on the roof of a normal car, are extremely inconvenient when they are fixed on the roof of a pick-up or all-terrain car because the height of these vehicles makes it impossible for the user to reach over the pair of bars, to the extent that it is necessary to use a ladder or similar when loading and unloading in order to work comfortably over the roof of the car.

In view of these problems, a new luggage-rack has been designed especially for pick-ups and all-terrain cars to resolve the difficulties encountered in loading and unloading luggage from the roof.

The luggage-rack according to the invention consists of a pair of bars as described above, each of which acts as a support and runner for a pair of opposing aligned rails which slide horizontally and which can be turned downwards at the end of the extraction run.

Once the rails have been turned over they are moved into a sub-vertical position practically in front of the side windows and doors of the car.

By fitting these rails with supports suitable for the luggage to be loaded, the user can comfortably load the same on the lowered tracks from the ground, and once the operation has been completed, the rails lift to a horizontal position and slide inwards over their respective support and runner bars into which they lock at the end of the run in order to avoid them from sliding out and consequently becoming a potential source of danger.

Unloading operations can be carried just as comfortably from the ground standing next to the car, since, after releasing the self-locking device, the user simply pulls out the sliding rails and tips them downwards so as to lower the load to a working height.

These operations are extremely easy to carry out considering that a person standing on the ground, regardless of the height of the vehicle roof, can generally easily reach above the drip mouldings of the car roof where the above sliding bars are positioned, and can grasp them without any problem.

For major clarity the description of the invention continues with reference to the enclosed drawings which are intended for purposes of illustration only and not in a limiting sense, where:

- fig. 1 is a front view of one of the two bars which together form the luggage-rack according to the invention;

- fig. 2 is the same view as that in fig. 1, with the only difference that one of the sliding rails has been illustrated completed pulled out and turned downwards;

- fig. 3 is a cross-section of fig. 1 with plane III-III;

- fig. 4 is a cross-section of fig. 1 with the plane IV-IV.

With reference to the above figures, the luggage-rack in question consists of a bar (1) having a square cross-section, used together with another identical bar, in order to form on the top of the car roof, a pair of identical transverse bridges, one at the front and another at the back.

Said bar (1) at the ends has two support and stabilizing legs (1a) resting on the side drip moulding of the roof, to which suitable systems, not shown in the figure, of the type normally used on current car luggage-racks, can be secured.

The peculiarity of this transverse bar (1) is that it acts as a support and runner for two identical and opposing rails (2), which slide and can be removed laterally on opposing sides, made of metal box-shaped structural section having a "U" shaped cross-section in a suitable size to hold the bar (1) precisely.

The coupling between the transverse bar (1) and the overlying sliding rails (2) is provided for each rail by a pair of wheels (3) which can turn within two corresponding grooves (1b) on the two sides of the bar (1).

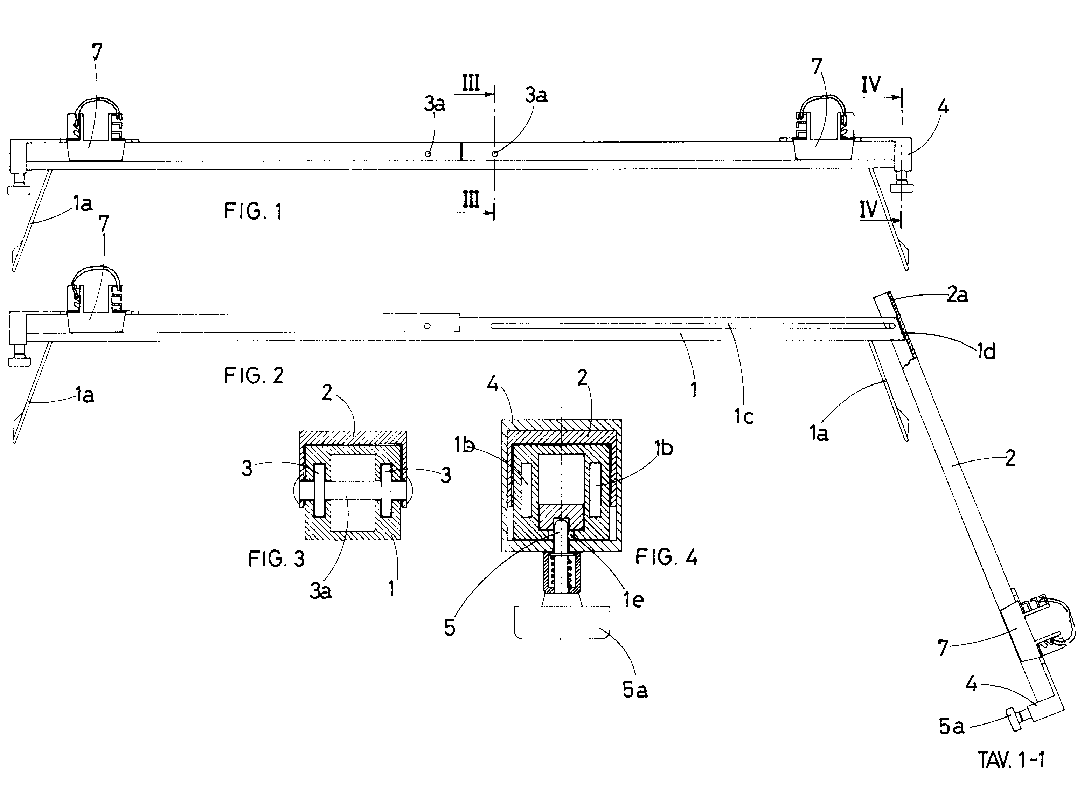

As shown in fig. 3, the end pins of the keying axis (3a) of the wheels (3) are inserted and fixed into two corresponding holes on the internal end of each rail (2); the keying axis (3a) passes from one side to the other of the bar (1), whose sides bear a longitudinal milling (1c) along which the axis (3a) runs during the alternating runs of the rails (2) on the underlying bar (1).

This longitudinal milling starts next to the middle section of the bar (1) and stops close to its end section (1d). Once the rail (2) has been extracted completed, it can be turned downwards, as illustrated in fig. 2, into a subvertical position having a maximum inclination, on to which the internal top face (2a) of the rail (2) stops and abuts against the external end section (1d) of the bar (1) which is inclined suitably to stop the rail (2) from moving into a perfectly vertical position which would make it knock against the side of the car door.

In order to prevent the rails (2) from accidently slipping on the underlying bar (1), the end of each rail (2) has a system which locks the rail when it is pushed in fully. The preferred embodiment of this device consists of a support cover (4) for a vertical pin (5), with handle knob (5a) supported beneath said cover (4) so that it can easily be reached by the user standing on the ground.

This pin is constantly subject to the thrust of a precompressed spring (6) which presses it against the bottom face of the bar (1) which, at the end cross-section (1d) has a hole (1e) into which this pin tends spontaneously to fit against the thrust of the spring (6), when, after the rail (2) slides on the bar (1), the above hole and pin (5) are aligned.

In other words, the rail (2) locks automatically on the bar (1) simply by pushing the rail in fully, while the pin (5) must be pulled out manually from the hole (1e) in order to extract the rail.

Luggage can be placed and fixed on the rails (2) provided the shape and size of the luggage allows them to be arranged simply on the rails.

In the case of special loads, supports normally available on the market designed to secure specific objects, can be mounted on the rails (2).

By way of example, Figs. 1 and 2 illustrate the rails (2) equipped with special ski-carrier supports (7).

## Claims

**1)** A luggage-rack for cars having a high roof characterized by a bar (1) used together with another identical bar having two support and stabilizing legs (1a) at the ends resting on the car roof, which acts as a support and runner for two identical sliding rails (2) which can be removed laterally from opposing sides, each of which, when fully pulled out can be turned downwards into a sub-vertical position of maximum inclination on which the internal top face (2a) of the rail (2) stops and abuts against the end cross-section (1d) of the bar (1), having a suitable inclination for this purpose.

**2)** A luggage-rack for cars having a high roof according to claim 1 whereby in a preferred embodiment the coupling between bar (1) and the overlying sliding rails (2) having a box-shaped section with "U" shaped cross-section, for each rails consists of a pair of wheels (3), turning within two corresponding grooves (1b) on the two sides of the bar (1) having longitudinal milling (1c) along which the keying axis (3a) of the wheels (3) runs, whose pins are fitted and fixed into two corresponding holes on the rails (2) at their internal ends (3).

**3)** A luggage-rack for cars having a high roof according to claim 1 having a self-locking device for the rails (2) at the end of the retraction run, which, in its preferred embodiment consists of a cover (4) mounted at the external end of each bar (2) supporting a vertical pin (5) having a handle knob (5a) which is constantly subjected to the thrust of a precompressed spring (6) which presses it against the other against the bottom face of the bar (1) which, at its end section (1d) has a hole (1e) into which said pin (5) tends spontaneously to fit against the thrust of the spring (6), when the hole (1e) and the pin (5) are aligned

FIG. 1

FIG. 2

FIG. 3

FIG. 4

TAV. 1-1

**European Patent Office**

# EUROPEAN SEARCH REPORT

Application Number

EP 92 83 0192

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>A | FR-A-2 596 344 (BOISGERAULT, M. J. L.)<br>* page 6, line 21 - page 7, line 9 *<br>* page 10, line 31 - page 11, line 14 *<br>* figures 1,2,9 *<br>--- | 1<br>3 | B60R9/042 |
| X<br>A | FR-A-2 627 730 (CARROSERIE SURIREY JAGOU S.A.)<br>* page 3, line 35 - page 4, line 30 *<br>* figures 1,2,9A-9C *<br>--- | 1<br>3 | |
| A | DE-A-3 626 896 (SCHMIEDER, HARALD ET AL.)<br>* column 5, line 43 - line 51; figures 2,3,5 *<br>----- | 2 | |
| | | | **TECHNICAL FIELDS SEARCHED (Int. Cl.5)**<br><br>B60R |

The present search report has been drawn up for all claims

| Place of search | Date of completion of the search | Examiner |
|---|---|---|
| THE HAGUE | 31 JULY 1992 | AREAL CALAMA A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document